# EUROPEAN PATENT SPECIFICATION

(11) **EP 0 604 757 B1**
(45) Date of publication and mention of the grant of the patent: **06.08.1997**
(21) Application number: 93118734.8
(22) Date of filing: 22.11.1993
(51) Int. Cl.: B29C 70/00, B29D 23/00

(54) **Method and apparatus for forming a tubular body of composite thermoplastics material.**
Verfahren und Vorrichtung zur Herstellung eines rohrförmigen thermoplastischen Verbundkörpers.
Méthode et installation pour la fabrication d'un corps tubulaire composite thermoplastique.

(30) Priority: 29.12.1992 IT TO921050
(43) Date of publication of application: 06.07.1994
(73) Proprietor: FIAT AUTO S.p.A., 10135 Torino (IT)
(72) Inventor: Da Re', Mario, I-10128 Torino (IT); Guidoboni, Paolo Giuseppe, I-10129 Torino (IT)
(74) Representative: Marchitelli, Mauro

(56) References cited:
- EP-A- 0 246 019
- EP-A- 0 327 085
- WO-A-83/02085
- WO-A-91/16192
- FR-A- 2 504 449
- FR-E- 69 427
- GB-A- 2 082 112

## Description

The present invention relates to structures of composite material with a matrix of thermoplastics resin for use as structural reinforcing elements in various technical fields.

More particularly, the invention relates to a method for forming a composite thermoplastic body of tubular form.

FR-A-2 504 449 discloses a method for forming a tubular body of composite thermoplastic material, having the features indicated in the pre-characterising portion of appended claim 1

The main object of the present invention is to provide a method for forming tubular members of the type defined above which are suitable for replacing the metal reinforcing elements normally used, for example in motor-vehicle manufacturing, for the construction of structural members such as underfloor crossbars, roll bars or frames of movable parts. Such members of composite thermoplastics material, even if having a structural strength at least equivalent to that of similar metal elements, have the considerable advantage of a much smaller weight than metal elements.

The object of the invention is achieved by means of a method including the steps indicated in the appended Claim 1.

A further subject of the invention is an apparatus which enables the method of the present invention to be carried out.

This apparatus has the features indicated in claim 17.

The tubular body obtainable with the present invention has extremely good mechanical properties which make it suitable for replacing structural parts which in the past were made from metal elements, enabling the weight of these parts to be reduced considerably.

Further characteristics and advantages of the present invention will become apparent from the detailed description which follows, made with reference to the appended drawings, given purely by way of non-limiting example, in which:
Figure 1 is a schematic, sectioned, side elevational view of apparatus for forming a tubular member of composite thermoplastics material according to the present invention,
Figure 2 is an elevational view of the apparatus of Figure 1 sectioned along the line II-II,

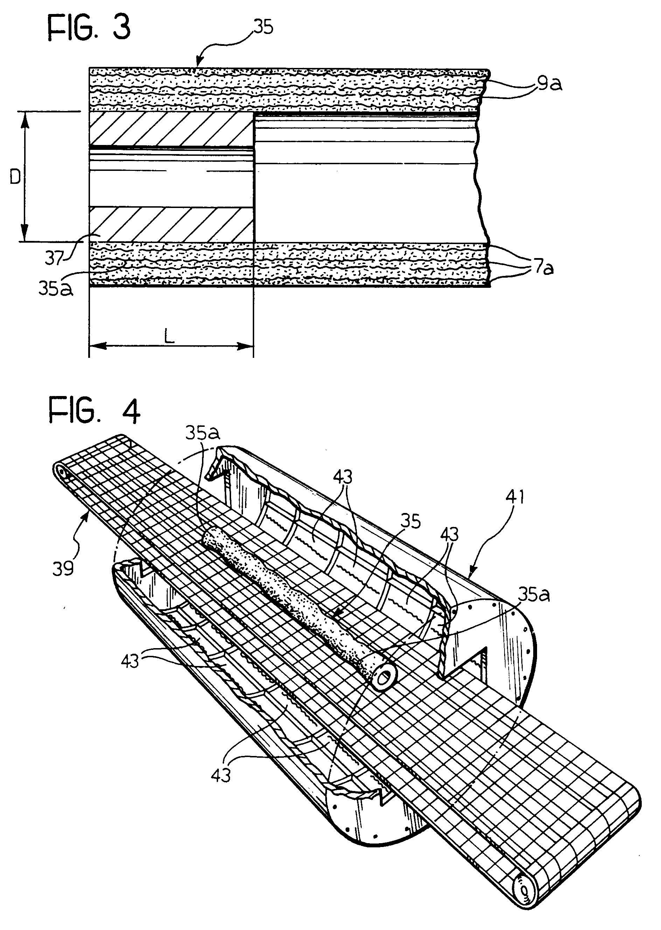

Figure 3 is a schematic, sectioned side elevational view of part of a tubular member formed with the use of the apparatus of Figures 1 and 2, and
Figure 4 is a schematic perspective view of apparatus for heating the tubular member before it is subjected to a final forming operation.

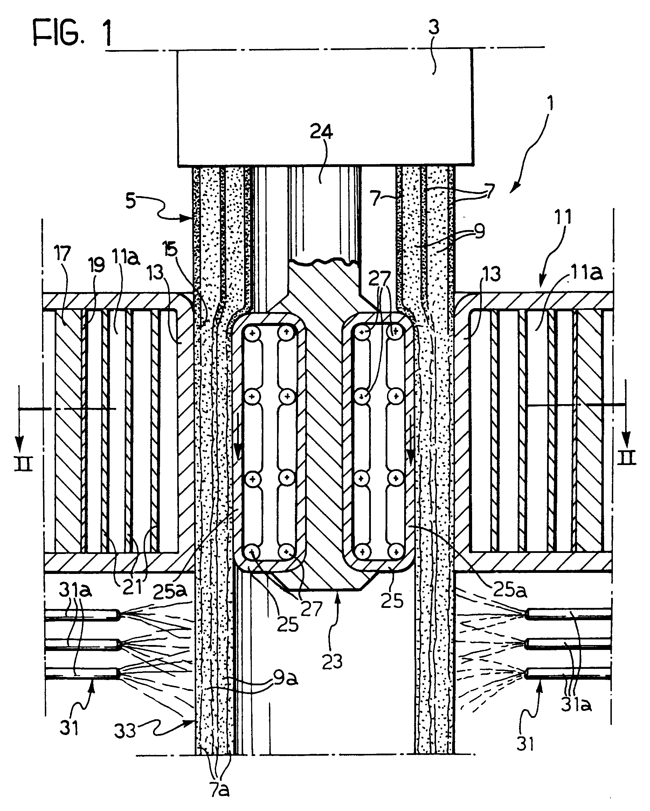

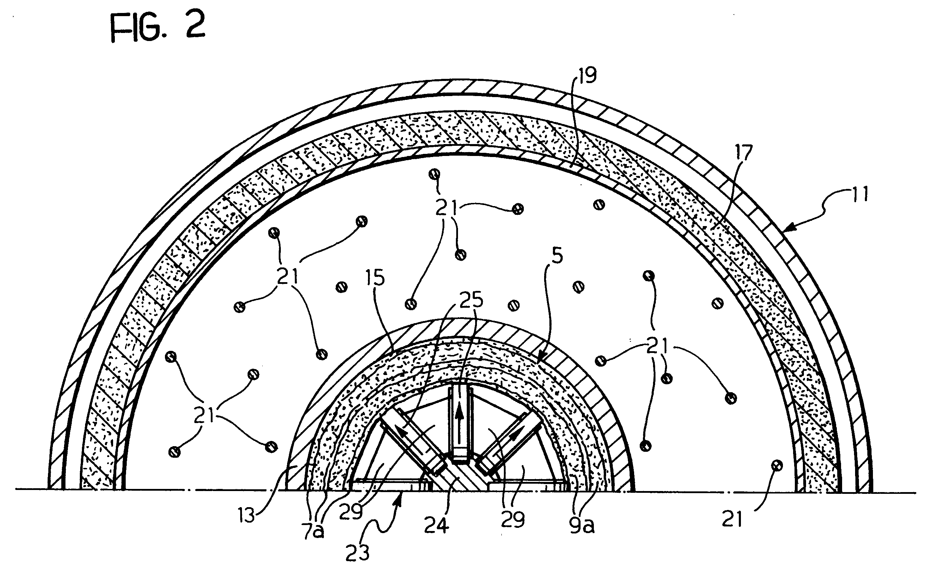

With reference firstly to Figures 1 and 2, apparatus for forming a tubular body of composite thermoplastics material is generally indicated 1.

The apparatus 1 preferably includes a generator device 3 for generating a continuous tubular member 5 which, for example, includes an outer layer, an inner layer and an intermediate layer 7 of thermoplastics material between which are interposed layers 9 of woven or non-woven textile of reinforcing fibres, for example glass fibres, aramidic fibres, carbon fibres, vegetable fibres or metal fibres. Alternatively the tubular member 5 could be made from thermoplastics resin elements and reinforcing fibres in any preferred different configuration.

Below the generator device 3 is an annular body 11 defining an internal cylindrical chamber 15 coaxial with the tubular member 5. The cylindrical chamber 15 is bounded laterally by an annular abutment wall 13.

The body 11 is constituted by an annular casing which is hollow so as to define an internal, substantially toroidal chamber 11a bounded by a wall 17 of insulating material substantially parallel to the abutment wall 13 and externally surrounding it. The wall 17 preferably has a reflective surface 19 facing the abutment wall 13. Between the reflective surface 19 and the abutment wall 13 are elongate resistive elements 21 which extend parallel to the tubular member 5 and are arranged on a plurality of concentric circles coaxial with the abutment wall 13. Preferably the resistances 21 are arranged so as to be radially staggered relative to each other so that they all face the abutment wall 13 directly.

Preferably the annular abutment wall 13 extends axially for a distance at least equal to the diameter of the cylindrical chamber 15. Thus the heat generated by the resistive elements 21 is transmitted in an optimum manner to the annular wall 13 and hence to the tubular member 5.

Within the cylindrical chamber 15 is a head 23 suspended from the generator 3 by means of a column 24. The head 23 supports a plurality of flexible annular elements 25 each rotatable on a plurality of rollers 27 supported by the head 23.

At least one of the rollers 27 associated with each of the annular elements 25 has toothing so that it can rotate the respective annular element 25 which is preferably constituted by a chain. Moreover at least one of the rollers 27 is preferably provided with a resilient device for regulating the tension of the respective annular element 25 to compensate for lengthenings thereof which occur when it is heated by the resistive elements 21.

The annular elements 25 are arranged radially of the head 23 (as illustrated more clearly in Figure 2) and each has a straight pass 25a which extends parallel to and adjacent the annular abutment wall 13 and is of substantially the same length thereas.

Motors 29 are arranged between pairs of adjacent annular elements 25, each of the motors being intended to rotate a respective annular element 25 in the direction indicated by the arrows in Figures 1 and 2.

After the annular body 11 there is a cooling unit 31 including nozzles 31a disposed radially of the tubular member. These nozzles 31a are arranged to spray the outer surface of the tubular body 5 with a fluid, for example air.

In use of the apparatus 1, the tubular member 5 is supplied by the feed device 3 to the cylindrical chamber 15 of the body 11 so that it enters the annular chamber defined between the abutment wall 13 and the straight passes 25a of the annular elements 25. Thus the abutment wall 13 defines the outer surface of the composite element 5 while its internal surface is defined by the straight passes 25a of the annular elements 25. Thanks to the heat generated by the resistive elements 21, the thermoplastics material 7 is brought to melting point and tends to migrate between the reinforcing fibres 9. The annular elements 25 exert a radially compressive force on the walls of the tubular member 5, this compression acting towards the annular wall 13 so as to promote the migration of the thermoplastics material 7 between the reinforcing fibres 9.

At the outlet from the annular body 11, the tubular member 5 thus has, in its transversal sections, reinforcing fibres 9a embedded in the thermo-plastics matrix and thin outer, inner and intermediate layers 7a which consist mainly of the thermoplastics matrix.

The annular elements 25, by their rotation, also enable the tubular member 5 to be drawn so that its various axial portions are subject successively to the heating and radial compression which occur simultaneously within the chamber 15 defined by the annular body 11.

Subsequently the cooling unit 31 cools the tubular member 5 leaving the chamber 15 so as to facilitate the solidification of the thermoplastics matrix so that the apparatus 1 generates a rigid body 33 of composite thermoplastics material continuously.

The body 33 may easily be divided into offcuts 35, each of a length suitable for forming a finished product which can serve as a structural member. These offcuts can be stored awaiting their subsequent working to form the finished product.

Subsequently, respective sockets 37 of substantially rigid material, (see fig. 5), for example steel, are inserted into the ends 35a of each offcut 35 to maintain the shape of the ends 35a of each offcut 35. Preferably each bush 37 extends axially for a length L which may vary from one to two times the outer diameter D of the bush, which corresponds to the inner diameter of the offcut 35.

Subsequently the offcut 35 is positioned, either automatically or manually by an operator, on a mesh conveyor belt 39, preferably of metal, which passes through an oven 41 within which is a plurality of infra-red lamps 43 or, alternatively, other heating devices of known type. Within the oven 41 the offcut 35 is thus heated uniformly from all sides, by virtue also of the apertures between the meshes of the belt 39, until it has reached a temperature of about 180°C and become partly flexible due to the softening of its wall. The offcut 35 is taken from the oven 41 in this condition and positioned within a mould cavity (not illustrated in the drawings) heated to a temperature close to 180°C for example and within which it will undergo hydroforming.

The mould cavity has a surface shaped so as to define the shape which the finished product is to have at the end of the operation. More particularly, the mould may have projecting or re-entrant elements on its internal surface and may have any cross-section whatsoever, for example substantially parallelepipedal.

Respective valve units (not illustrated) are inserted and then fixed in the end bushes 37, each valve unit including a two-way valve whose opening and closing in the two directions may be remote controlled, for example by means of an electrical signal. A pressurised fluid, for example oil, air, water or steam, heated to a temperature close to that of the mould, is supplied through the valves to the interior of the offcut 35, which is already positioned in the closed mould, so as to cause the offcut 35 to expand so that its outer surface comes into contact with the inner surface of the mould enabling the finished product to be obtained with the desired shape.

When the cooled offcut 35 is removed from the mould, the bushes 37 will be withdrawn from the ends 35a or the ends 35a together with their bushes 37 will be separated from the remaining part of the offcut 35.

Naturally, the principle of the invention remaining the same, the forms of embodiment and constructional details may be varied widely without thereby departing from the scope of the present invention.

## Claims

1. A method for forming a tubular body of composite thermoplastics material (33), including the steps of:
- providing a tubular member (5) comprising a thermoplastics matrix (7) and reinforcing fibres (9),
- externally heating the tubular member (5) in a heating device to a temperature such as to cause the fusion of the thermoplastics matrix (7),
- subjecting the wall of the tubular member (5) to radial compression so as to define the outer surface of the tubular member (5) and to promote the migration of the thermoplastics matrix (7) between the reinforcing fibres (9), and
- cooling the tubular member so as to cause the thermoplastics matrix (7) to solidify,
characterised in that the radial compression is directed from the inside towards the outside of the tubular member (5) allowing also to define the internal surfaces of the tubular element (5), the step of subjecting the tubular member (5) to a radial compression being effected instantaneously on its same axial portion which is subject to heating.

2. A method according to Claim 1, characterised in that the heating of the tubular member (5) is effected by means of an external heating device (11) arranged so as to surround an axial portion of the tubular member (5) which extends longitudinally for a length at least equal to the outer diameter of the tubular member (5).

3. A method according to Claim 1 or 2, characterised in that the steps of heating and radial compression, and the step of cooling are effected instantaneously on successive portions of the tubular member (5).

4. A method according to any one of Claims 1 to 3, characterised in that the cooling of the tubular member (5) is effected by means of a device (31) for spraying a cooling fluid on its outer surface.

5. A method according to Claim 4, characterised in that the device (31) for spraying a cooling fluid includes a group of nozzles arranged radially of the tubular member (5) so as to direct air jets towards it.

6. A method according to any one of Claims 1 to 5, characterised in that the tubular member (5) is drawn axially in correspondence of the same portion which is subject to heating and radial compression.

7. A method according to Claim 6, characterised in that the radial compression and axial drawing of the tubular member (5) are effected by a head (23) disposed coaxially within the tubular member (5).

8. A method according to Claim 1, characterised in that the tubular member (5) includes at least an outer layer and an inner layer of thermoplastics material (7) and an intermediate core including a fabric or a non-woven textile of reinforcing fibres (9).

9. A method according to Claim 8, characterised in that the intermediate core of the tubular member (5) also includes a layer of thermoplastics material (7) parallel to the outer and inner layers of the thermoplastics material (7).

10. A method according to Claim 8 or 9, characterised in that the tubular member (5) is produced continuously by a generator device (3).

11. A method according to any one of Claims 1 to 10, characterised in that the rigid tubular body (33) obtained is divided into offcuts (35) each of which is subjected to a forming operation in a mould cavity by means of internal pressurisation with a heated fluid so that the outer wall of each offcut (35) contacts the inner walls of the mould cavity.

12. A method according to Claim 11, characterised in that each offcut (35) is heated in an oven (41) before the forming operation.

13. A method according to Claim 12, characterised in that respective bushes (37) are inserted in the ends (35a) of the offcut (35) before the offcut (35) is subjected to the heating step.

14. A method according to Claim 13, characterised in that the axial length (L) of each bush (37) is about one to two times its outer diameter (D).

15. A method according to Claim 13 or 14, characterised in that the bushes (37) are adapted to house respective valve units each including a two-way valve.

16. A method according to Claim 12, characterised in that the oven (41) includes a plurality of infra-red lamps (43) and is traversed by a mesh conveyor belt (39).

17. Apparatus for forming a tubular body of composite thermoplastics material, comprising a feed end intended to be supplied with a tubular member (5) including a thermoplastics matrix (7) and reinforcing fibres (9), a preforming device (11, 23) located in succession to the feed end, the preforming device (11, 23) being adapted to externally supply heat to the tubular member (5) so as to bring it to the melting point of the thermoplastics matrix (7), to define the outer surface of the tubular element (5) and to exert a radial compressive force on the walls of the tubular member (5),
characterised in that the preforming device (11, 23) is adapted to exert the radial compressive force directed from the inside towards the outside of the tubular member (5) while supplying heat from the outside of the tubular member (5), thereby also the internal surface of the tubular element (5) is defined, and to simultaneously draw the tubular member (5) axially away from the feed end.

18. Apparatus according to Claim 17, characterised in that the tubular member (5) includes at least an outer layer and an inner layer of thermoplastics material (7) and an intermediate core including a fabric or a non-woven textile of reinforcing fibres (9).

19. Apparatus according to Claim 18, characterised in that the intermediate core of the tubular member further includes a layer of thermoplastics material (7) parallel to the said outer and inner layers of thermoplastics material (7).

20. Apparatus according to any one of Claims 17 to 19, characterised in that it includes a generator device (3) for producing the tubular member (5) continuously.

21. Apparatus according to Claim 17 or 20, characterised in that it further includes a cooling unit (31) for cooling the tubular member (5) leaving the preforming device.

22. Apparatus according to Claim 21, characterised in that the cooling unit (31) includes a plurality of nozzles (31a) disposed radially of the tubular member (5) and able to direct air jets at it.

23. Apparatus according to Claim 21 or 22, characterised in that the preforming device has an annular body (11) arranged to surround the tubular member (5), the annular body (11) including an annular abutment wall (13) intended to define the outer surface of the tubular body, the annular body (33) being provided with means for generating heat (21).

24. Apparatus according to Claim 23, characterised in that the heat generating means include resistive elements (21).

25. Apparatus according to Claim 24, characterised in that the resistive elements (21) are interposed between the annular abutment wall (13) and an annular insulating wall (17).

26. Apparatus according to Claim 24 or 25, characterised in that the resistive elements (21) are arranged parallel to the axis of the tubular member (5).

27. Apparatus according to Claim 26, characterised in that the resistive elements (21) are arranged on a plurality of concentric circumferences coaxial with the annular abutment wall (13) and are radially staggered relative to each other.

28. Apparatus according to Claim 27, characterised in that the annular insulating wall (17) has a reflective surface (19) facing the resistive elements (21).

29. Apparatus according to any one of Claims 23 to 28, characterised in that the annular abutment wall (13) extends axially of the tubular member (5) through a distance at least equal to the outer diameter of the tubular member (5).

30. Apparatus according to any one of Claims 24 to 30, characterised in that a head (23) is provided in correspondence with the annular abutment wall (13), coaxially thereof for radially compressing the wall of the tubular member (5) against the annular abutment wall (13) and for drawing the tubular member axially away from the generator device (3).

31. Apparatus according to Claim 30, characterised in that the head includes:
- a plurality of flexible, rotatable, annular elements (25) arranged radially of the annular abutment wall (13) of the annular body (11) and each having a straight outer pass (25a) which extends parallel to and adjacent the annular abutment wall (13),
- drive means (29) for rotating the flexible annular elements (25),
such that the straight passes (25a) of the annular elements (25), rotated by the drive means (29), exert a radial compressive force on the walls of the tubular member (5), pressing them against the annular abutment element (13), and draw the tubular member (5) axially.

32. Apparatus according to Claim 31, characterised in that the flexible annular elements (25) run on rollers (27) carried by the head (23).

33. Apparatus according to Claim 32, characterised in that at least one of the rollers (27) associated with each flexible annular element (25) is toothed and arranged to transmit drive from at least one motor (29) to the respective flexible annular element (25).

34. Apparatus according to Claim 33, characterised in that the head (23) includes a respective motor (29) for each of the flexible annular element (25).

35. Apparatus according to Claim 34, characterised in that each respective motor (29) is interposed between a pair of adjacent flexible annular elements (25).

36. Apparatus according to Claim 35, characterised in that the flexible annular elements (25) are chains and the toothed roller is a pinion.

## Patentansprüche

1. Verfahren zur Herstellung eines rohrförmigen Körpers aus einem thermoplastischen Verbundmaterial (33), wobei das Verfahren folgende Schritte aufweist:
- Zuführen eines rohrförmigen Elements (5), das ein thermoplastisches Bindemittel (7) sowie Verstärkungsfasern (9) enthält,
- Erwärmen des rohrförmigen Elements (5) von außen in einer Heizeinrichtung auf eine Temperatur, um das thermoplastische Bindemittel (7) zum Schmelzen zu bringen,
- Aufbringen eines Radialdrucks auf die Wand des rohrförmigen Elements (5), um die Außenfläche des rohrförmigen Elements (5) festzulegen und das Wandern des thermoplastischen Bindemittels (7) zwischen die Verstärkungsfasern (9) zu unterstützen, und
- Abkühlen des rohrförmigen Elements, um ein Erstarren des thermoplastischen Bindemittels (7) hervorzurufen,
dadurch gekennzeichnet, daß der radiale Druck von der Innenseite zur Außenseite des rohrförmigen Elements (5) gerichtet wird, um dadurch auch die Innenflächen des rohrförmigen Elements (5) festzulegen, wobei der Schritt, bei dem auf das rohrförmige Element (5) ein Radialdruck aufgebracht wird, gleichzeitig an der gleichen axialen Stelle ausgeführt wird, die der Erwärmung unterworfen ist.

2. Verfahren gemäß Anspruch 1, dadurch gekennzeichnet, daß das Erwärmen des rohrförmigen Elements (5) mit einer externen Heizeinrichtung (11) hervorgerufen wird, die so angeordnet ist, daß sie einen axialen Teil des rohrförmigen Elements (5) umgibt, der in Längsrichtung über einen Abstand verläuft, der zumindest gleich dem Außendurchmesser des rohrförmigen Elements (5) ist.

3. Verfahren gemäß Anspruch 1 oder 2, dadurch gekennzeichnet, daß die Schritte zum Erwärmen und zum Aufbringen eines Radialdrucks sowie der Schritt zum Abkühlen gleichzeitig bei aufeinanderfolgenden Teilen des rohrförmigen Elements (5) ausgeführt werden.

4. Verfahren gemäß irgendeinem der Ansprüche 1 bis 3, dadurch gekennzeichnet, daß das Abkühlen des rohrförmigen Elements (5) mit einer Vorrichtung (31) erfolgt, um ein Kühlfluid auf dessen Außenseite zu sprühen.

5. Verfahren gemäß Anspruch 4, dadurch gekennzeichnet, daß die Vorrichtung (31) zum Versprühen eines Kühlfluids eine Gruppe von Düsen aufweist, die radial zum rohrförmigen Element (5) angeordnet sind, um Luftströme auf dieses zu richten.

6. Verfahren gemäß irgendeinem der Ansprüche 1 bis 5, dadurch gekennzeichnet, daß das rohrförmige Element (5) axial in Übereinstimmung mit dem gleichen Teil gezogen wird, der einer Erwärmung und einem radialen Druck unterworfen ist.

7. Verfahren gemäß Anspruch 6, dadurch gekennzeichnet, daß der radiale Druck und der axiale Zug des rohrförmigen Elements (5) von einem Kopf (23) ausgeführt werden, der koaxial innerhalb des rohrförmigen Elements (5) angeordnet ist.

8. Verfahren gemäß Anspruch 1, dadurch gekennzeichnet, daß das rohrförmige Element (5) zumindest eine Außenschicht und eine Innenschicht aus einem thermoplastischen Material (7) sowie einen Zwischenkern aufweist, der ein Gewebe oder ein Vlies aus Verstärkungsfasern (9) enthält.

9. Verfahren gemäß Anspruch 8, dadurch gekennzeichnet, daß der Zwischenkern des rohrförmigen Elements (5) weiters eine Schicht aus einem thermoplastischen Material (7) aufweist, die parallel zur Außen- und Innenschicht des thermoplastischen Materials (7) verläuft.

10. Verfahren gemäß Anspruch 8 oder 9, dadurch gekennzeichnet, daß das rohrförmige Element (5) von einer Zuführeinrichtung (3) endlos hergestellt wird.

11. Verfahren gemäß irgendeinem der Ansprüche 1 bis 10, dadurch gekennzeichnet, daß der steife rohrförmige Körper (33), den man erhält, in abgeschnittene Stücke (35) geteilt wird, von denen jedes in einer Hohlform mit Hilfe eines Innendrucks einem Formvorgang unterworfen wird, der mit einem geheizten Fluid erzeugt wird, so daß die Außenwand eines jeden abgeschnittenen Stücks (35) mit den Innenwänden der Hohlform in Berührung tritt.

12. Verfahren gemäß Anspruch 11, dadurch gekennzeichnet, daß jedes abgeschnittene Stück (35) in einem Ofen (41) erwärmt wird, bevor der Formvorgang erfolgt.

13. Verfahren gemäß Anspruch 12, dadurch gekennzeichnet, daß entsprechende Hülsen (37) in die Enden (35a) des abgeschnittenen Stücks (35) eingesetzt werden, bevor das abgeschnittene Stück (35) dem Heizschritt unterworfen wird.

14. Verfahren gemäß Anspruch 13, dadurch gekennzeichnet, daß die axiale Länge (L) einer jeden Hülse (37) etwa dem einfachen oder dem doppelten Außendurchmesser (D) entspricht.

15. Verfahren gemäß Anspruch 13 oder 14, dadurch gekennzeichnet, daß die Hülsen (37) so ausgebildet sind, um entsprechende Ventileinrichtungen aufzunehmen, von denen jede ein Wechselventil aufweist.

16. Verfahren gemäß Anspruch 12, dadurch gekennzeichnet, daß der Ofen (41) eine Vielzahl von Infrarotlampen (43) aufweist und von einem netzartigen Förderband (39) durchlaufen wird.

17. Vorrichtung zur Herstellung eines rohrförmigen Körpers aus einem thermoplastischen Verbundmaterial, wobei die Vorrichtung ein Zuführende, das dazu dient, um mit einem rohrförmigen Element (5) beschickt zu werden, das ein thermoplastisches Bindemittel (7) sowie Verstärkungsfasern (9) aufweist, sowie eine Vorformeinrichtung (11, 23) enthält, die nach dem Zuführende angeordnet ist, wobei die Vorformeinrichtung (11, 23) so aufgebaut ist, um dem rohrförmigen Element (5) von außen Wärme zuzuführen, um es zum Schmelzpunkt des thermoplastischen Bindemittels (7) zu bringen, um die Außenfläche des rohrförmigen Elements (5) festzulegen und auf die Wände des rohrförmigen Elements (5) eine radiale Druckkraft auszuüben,
dadurch gekennzeichnet, daß die Vorformeinrichtung (11, 23) dazu dient, um die radiale Druckkraft, die von innen nach außen des rohrförmigen Elements (5) gerichtet ist, aufzubringen, während von außen Wärme an das rohrförmige Element (5) aufgebracht wird, um dadurch auch die Innenfläche des rohrförmigen Elements (5) festzulegen, wobei gleichzeitig das rohrförmige Element (5) axial vom Zuführende weggezogen wird.

18. Vorrichtung gemäß Anspruch 17, dadurch gekennzeichnet, daß das rohrförmige Element (5) zumindest eine Außenschicht und eine Innenschicht des thermoplastischen Materials (7) sowie einen Zwischenkern aufweist, der ein Gewebe oder ein Vlies aus Verstärkungsfasern (9) enthält.

19. Vorrichtung gemäß Anspruch 18, dadurch gekennzeichnet, daß der Zwischenkern des rohrförmigen Elements weiters eine Schicht eines thermoplastischen Materials (7) parallel zur Außen- und Innenschicht des thermoplastischen Materials (7) aufweist.

20. Vorrichtung gemäß irgendeinem der Ansprüche 17 bis 19, dadurch gekennzeichnet, daß die Vorrichtung eine Zuführeinrichtung (3) aufweist, um das rohrförmige Element (5) fortlaufend zu erzeugen.

21. Vorrichtung gemäß Anspruch 17 oder 20, dadurch gekennzeichnet, daß die Vorrichtung weiters eine Kühleinheit (31) aufweist, um das rohrförmige Element (5) abzukühlen, das die Vorformeinrichtung verläßt.

22. Vorrichtung gemäß Anspruch 21, dadurch gekennzeichnet daß die Kühleinheit (31) eine Vielzahl von Düsen (31a) aufweist, die radial zum rohrförmigen Element (5) angeordnet sind, um Luftströme auf dieses zu richten.

23. Vorrichtung gemäß Anspruch 21 oder 22, dadurch gekennzeichnet, daß die Vorformeinrichtung einen Ringkörper (11) besitzt, der so angeordnet ist, daß er das rohrförmige Element (5) umschließt, wobei der Ringkörper (11) eine ringförmige Endwand (13) aufweist, die dazu dient, um die Außenfläche des rohrförmigen Körpers festzulegen, wobei der Ringkörper (33) mit einer Einrichtung (21) versehen ist, um Wärme zu erzeugen.

24. Vorrichtung gemäß Anspruch 23, dadurch gekennzeichnet, daß die Wärmeerzeugungseinrichtung Widerstandselemente (21) aufweist.

25. Vorrichtung gemäß Anspruch 24, dadurch gekennzeichnet, daß die Widerstandselemente (21) zwischen der ringförmigen Endwand (13) und der ringförmigen Trennwand (17) liegen.

26. Vorrichtung gemäß Anspruch 24 oder 25, dadurch gekennzeichnet, daß die Widerstandselemente (21) parallel zur Achse des rohrförmigen Elements (5) angeordnet sind.

27. Vorrichtung gemäß Anspruch 26, dadurch gekennzeichnet, daß die Widerstandselemente (21) auf einer Vielzahl von konzentrischen Kreisen angeordnet sind, die koaxial zur ringförmigen Endwand (13) liegen, wobei sie radial relativ zueinander versetzt sind.

28. Vorrichtung gemäß Anspruch 27, dadurch gekennzeichnet, daß die ringförmige Trennwand (17) eine reflektierende Oberfläche (19) besitzt, die den Widerstandselementen (21) gegenüberliegt.

29. Vorrichtung gemäß irgendeinem der Ansprüche 23 bis 28, dadurch gekennzeichnet, daß die ringförmige Endwand (13) axial zum rohrförmigen Element (5) über einen Abstand verläuft, der zumindest gleich dem Außendurchmesser des rohrförmigen Elements (5) ist.

30. Vorrichtung gemäß irgendeinem der Ansprüche 24 bis 30, dadurch gekennzeichnet, daß ein Kopf (23) in Übereinstimmung mit der ringförmigen Endwand (13) und koaxial mit dieser vorgesehen ist, um die Wand des rohrförmigen Elements (5) radial gegen die ringförmige Endwand (13) zu drücken und das rohrförmige Element axial von der Zuführeinrichtung (3) wegzuziehen.

31. Vorrichtung gemäß Anspruch 30, dadurch gekennzeichnet, daß der Kopf aufweist:
- eine Vielzahl von flexiblen, drehbaren Ringelementen (25), die radial zur ringförmigen Endwand (13) des Ringkörpers (11) angeordnet sind, wobei jedes einen geraden äußeren Lauf (25a) besitzt, der parallel zu und neben der ringförmigen Endwand (13) verläuft,
- einen Antrieb (29), um die flexiblen Ringelemente (25) in Drehung zu versetzen,
so daß der gerade Lauf (25a) der Ringelemente (25), die mit dem Antrieb (29) in Drehung versetzt werden, eine radiale Druckkraft auf die Wände des rohrförmigen Elements (5) ausübt, diese gegen das ringförmige Endelement (13) drückt und das rohrförmige Element (5) axial zieht.

32. Vorrichtung gemäß Anspruch 31, dadurch gekennzeichnet, daß die flexiblen Ringelemente (25) auf Rollen (27) laufen, die im Kopf (23) gelagert sind.

33. Vorrichtung gemäß Anspruch 32, dadurch gekennzeichnet, daß zumindest eine der Rollen (27), die jedem flexiblen Ringelement (25) zugeordnet sind, gezahnt und so angeordnet ist, um den Antrieb von zumindest einem Motor (29) zum entsprechenden flexiblen Ringelement (25) zu übertragen.

34. Vorrichtung gemäß Anspruch 33, dadurch gekennzeichnet, daß der Kopf (23) einen entsprechenden Motor (29) für jedes flexible Ringelement (25) aufweist.

35. Vorrichtung gemäß Anspruch 34, dadurch gekennzeichnet, daß jeder Motor (29) zwischen einem Paar von benachbarten flexiblen Ringelementen (25) liegt.

36. Vorrichtung gemäß Anspruch 35, dadurch gekennzeichnet, daß die flexiblen Ringelemente (25) Ketten sind, wobei die gezahnte Rolle ein Ritzel ist.

## Revendications

1. Procédé de formage d'un corps tubulaire en matière thermoplastique composite (33), comprenant les étapes consistant à :
- produire un élément tubulaire (5) comportant une matrice thermoplastique (7) et des fibres de renfort (9),
- chauffer par l'extérieur l'élément tubulaire (5) dans un dispositif de chauffage jusqu'à une température qui provoque la fusion de la matrice thermoplastique (7),
- soumettre la paroi de l'élément tubulaire (5) à une compression radiale de façon à définir la surface extérieure de l'élément tubulaire (5) et faciliter la migration de la matrice thermoplastique (7) entre les fibres de renfort (9), et
- refroidir l'élément tubulaire de façon à amener la matrice thermoplastique (7) à se solidifier,
caractérisé en ce que la compression radiale est dirigée depuis l'intérieur vers l'extérieur de l'élément tubulaire (5) en permettant également de définir les surfaces internes de l'élément tubulaire (5), l'étape consistant à soumettre l'élément tubulaire (5) à une compression radiale étant effectuée instantanément sur la même partie axiale qui est soumise au chauffage.

2. Procédé selon la revendication 1, caractérisé en ce que le chauffage de l'élément tubulaire (5) est effectué au moyen d'un dispositif de chauffage externe (11) prévu de façon à entourer une partie axiale de l'élément tubulaire (5) qui s'étend longitudinalement sur une longueur au moins égale au diamètre extérieur de l'élément tubulaire (5).

3. Procédé selon la revendication 1 ou 2, caractérisé en ce que les étapes de chauffage et de compression radiale, et l'étape de refroidissement sont effectuées instantanément sur des parties successives de l'élément tubulaire (5).

4. Procédé selon l'une quelconque des revendications 1 à 3, caractérisé en ce que le refroidissement de l'élément tubulaire (5) est effectué au moyen d'un dispositif (31) destiné à pulvériser un fluide de refroidissement sur sa surface extérieure.

5. Procédé selon la revendication 4, caractérisé en ce que le dispositif (31) destiné à pulvériser un fluide de refroidissement comprend un groupe de buses disposées radialement par rapport à l'élément tubulaire (5) de façon à diriger les jets d'air vers celui-ci.

6. Procédé selon l'une quelconque des revendications 1 à 5, caractérisé en ce que l'élément tubulaire (5) est étiré axialement en correspondance avec la même partie qui est soumise au chauffage et à la compression radiale.

7. Procédé selon la revendication 6, caractérisé en ce que la compression radiale et l'étirage axial de l'élément tubulaire (5) sont effectués par une tête (23) disposée coaxialement dans l'élément tubulaire (5).

8. Procédé selon la revendication 1, caractérisé en ce que l'élément tubulaire (5) comprend au moins une couche extérieure et une couche intérieure de matière thermoplastique (7) et un noyau intermédiaire comprenant un tissu ou un textile non tissé de fibres de renfort (9).

9. Procédé selon la revendication 8, caractérisé en ce que le noyau intermédiaire de l'élément tubulaire (5) comprend également une couche de matière thermoplastique (7) parallèle aux couches extérieure et intérieure de la matière thermoplastique (7).

10. Procédé selon la revendication 8 ou 9, caractérisé en ce que l'élément tubulaire (5) est produit en continu par un dispositif générateur (3).

11. Procédé selon l'une quelconque des revendications 1 à 10, caractérisé en ce que le corps tubulaire rigide (33) obtenu est divisé en tronçons (35) soumis chacun à une opération de formage dans une cavité de moule au moyen d'une pressurisation interne avec un fluide chauffé de telle sorte que la paroi extérieure de chaque tronçon (35) vient en contact avec les parois internes de la cavité de moule.

12. Procédé selon la revendication 11, caractérisé en ce que chaque tronçon (35) est chauffé dans un four (41) avant l'opération de formage.

13. Procédé selon la revendication 12, caractérisé en ce que les douilles (37) respectives sont insérées dans les extrémités (35a) du tronçon (35) avant que le tronçon (35) soit soumis à l'étape de chauffage.

14. Procédé selon la revendication 13, caractérisé en ce que la longueur axiale (L) de chaque douille (37) est d'environ une à deux fois son diamètre extérieur (D).

15. Procédé selon la revendication 13 ou 14, caractérisé en ce que les douilles (37) sont prévues pour renfermer des unités de soupape respectives comprenant chacune une soupape à deux voies.

16. Procédé selon la revendication 12, caractérisé en ce que le four (41) comprend plusieurs lampes à infrarouge (43) et est traversé par une bande transporteuse perforée (39).

17. Appareil pour le formage d'un corps tubulaire en matière thermoplastique composite, comportant une extrémité d'alimentation prévue pour être alimentée avec un élément tubulaire (5) comprenant une matière thermoplastique (7) et des fibres de renfort (9), un dispositif de préformage (11, 23) disposé à la suite de l'extrémité d'alimentation, le dispositif de préformage (11, 23) étant prévu pour délivrer de l'extérieur de la chaleur à l'élément tubulaire (5) de façon à l'amener jusqu'au point de fusion de la matière thermoplastique (7), afin de définir la surface extérieure de l'élément tubulaire (5) et afin d'exercer une force de compression radiale sur les parois de l'élément tubulaire (5),
caractérisé en ce que le dispositif de préformage (11, 23) est prévu pour exercer la force de compression radiale dirigée depuis l'intérieur vers l'extérieur de l'élément tubulaire (5) tout en délivrant de la chaleur de l'extérieur de l'élément tubulaire (5), la surface interne de l'élément tubulaire (5) étant ainsi également définie, et pour étirer simultanément l'élément tubulaire (5) axialement à l'écart de l'extrémité d'alimentation.

18. Appareil selon la revendication 17, caractérisé en ce que l'élément tubulaire (5) comprend au moins une couche extérieure et une couche intérieure de matière thermoplastique (7) et un noyau intermédiaire comprenant un tissu ou un textile non tissé de fibres de renfort (9).

19. Appareil selon la revendication 18, caractérisé en ce que le noyau intermédiaire de l'élément tubulaire comprend en outre une couche de matière thermoplastique (7) parallèle aux dites couches extérieure et intérieure de matière thermoplastique (7).

20. Appareil selon l'une quelconque des revendications 17 à 19, caractérisé en ce qu'il comprend un dispositif générateur (3) destiné à produire en continu l'élément tubulaire (5).

21. Appareil selon la revendication 17 ou 20, caractérisé en ce qu'il comprend en outre une unité de refroidissement (31) destinée à refroidir l'élément tubulaire (5) qui quitte le dispositif de préformage.

22. Appareil selon la revendication 21, caractérisé en ce que l'unité de refroidissement (31) comprend plusieurs buses (31a) disposées radialement par rapport à l'élément tubulaire (5) et pouvant diriger des jets d'air sur celui-ci.

23. Appareil selon la revendication 21 ou 22, caractérisé en ce que le dispositif de préformage possède un corps annulaire (11) prévu pour entourer l'élément tubulaire (5), le corps annulaire (11) comprenant une paroi de butée annulaire (13) prévue pour définir la surface extérieure du corps tubulaire, le corps annulaire (33) étant pourvu de moyens (21) destinés à générer de la chaleur.

24. Appareil selon la revendication 23, caractérisé en ce que les moyens de génération de chaleur comprennent des éléments résistifs (21).

25. Appareil selon la revendication 24, caractérisé en ce que les éléments résistifs (21) sont interposés entre la paroi de butée annulaire (13) et une paroi isolante annulaire (17);

26. Appareil selon la revendication 24 ou 25, caractérisé en ce que les éléments résistifs (21) sont disposés parallèlement à l'axe de l'élément tubulaire (5).

27. Appareil selon la revendication 26, caractérisé en ce que les éléments résistifs (21) sont disposés sur une multiplicité de circonférences concentriques coaxiales à la paroi de butée annulaire (13) et sont décalés radialement l'une par rapport à l'autre.

28. Appareil selon la revendication 27, caractérisé en ce que la paroi isolante annulaire (17) possède une surface réfléchissante (19) face aux éléments résistifs (21).

29. Appareil selon l'une quelconque des revendications 23 à 28, caractérisé en ce que la paroi de butée annulaire (13) s'étend axialement par rapport à l'élément tubulaire (5) sur une distance au moins égale au diamètre extérieur de l'élément tubulaire (5).

30. Appareil selon l'une quelconque des revendications 24 à 29, caractérisé en ce qu'une tête (23) est prévue en correspondance avec la paroi de butée annulaire (13), coaxialement à celle-ci afin de comprimer radialement la paroi de l'élément tubulaire (5) contre la paroi de butée annulaire (13) et afin d'étirer l'élément tubulaire axialement à l'écart du dispositif générateur (3).

31. Appareil selon la revendication 30, caractérisé en ce que la tête comprend :
- plusieurs éléments annulaires rotatifs flexibles (25) disposés radialement par rapport à la paroi de butée annulaire (13) du corps annulaire (11) et ayant chacun une portion extérieure rectiligne (25a) qui s'étend parallèlement à et de façon adjacente à la paroi de butée annulaire (13),
- des moyens d'entraînement (29) destinés à entraîner en rotation les éléments annulaires flexibles (25),
de telle sorte que les portions rectilignes (25a) des éléments annulaires (25), entraînés en rotation par les moyens d'entraînement (29), exercent une force de compression radiale sur les parois de l'élément tubulaire (5), en les pressant contre l'élément de butée annulaire (13), et étirent axialement l'élément tubulaire (5).

32. Appareil selon la revendication 31, caractérisé en ce que les éléments annulaires flexibles (25) tournent sur des rouleaux (27) portés par la tête (23).

33. Appareil selon la revendication 32, caractérisé en ce qu'au moins un des rouleaux (27) associé à chaque élément annulaire flexible (25) est denté et prévu pour transmettre un entraînement depuis au moins un moteur (29) jusqu'à l'élément annulaire flexible (25) respectif.

34. Appareil selon la revendication 33, caractérisé en ce que la tête (23) comprend un moteur (29) respectif pour chacun des éléments annulaires flexibles (25).

35. Appareil selon la revendication 34, caractérisé en ce que chaque moteur (29) respectif est interposé entre une paire d'éléments annulaires flexibles (25) adjacents.

36. Appareil selon la revendication 35, caractérisé en ce que les éléments annulaires flexibles (25) sont des chaînes et le rouleau denté est un pignon.
